# FASCICULE DE BREVET EUROPEEN

(11) **EP 1 896 363 B1**
(45) Date de publication et mention de la délivrance du brevet: **25.01.2012**
(21) Numéro de dépôt: 06764704.0
(22) Date de dépôt: 23.05.2006
(51) Int. Cl.: C01B 39/48

(54) **ZEOLITHE DE TYPE STRUCTURAL EUO CONTENANT LE CATION N,N- DIMETHYL-N,N-DI(3,3-DIMETHYLBUTYL)AMMONIUM ET SON PROCEDE DE PREPARATION**
EUO-STRUKTURTYP-ZEOLIT MIT KATIONISCHEM N,N-DIMETHYL-N,N-DI(3,3-DIMETHYLBUTYL)AMMONIAK UND HERSTELLUNGSVERFAHREN DAFÜR
EUO STRUCTURAL TYPE ZEOLITE CONTAINING THE CATION N,N- DIMETHYL-N,N-DI(3,3-DIMETHYLBUTYL)AMMONIUM, AND THE PRODUCTION METHOD THEREOF

(30) Priorité: 16.06.2005 FR 0506135
(43) Date de publication de la demande: 12.03.2008
(73) Titulaire: Institut Français du Pétrole, 92852 Rueil Malmaison Cedex (FR)
(72) Inventeur: BATS, Nicolas, F-69320 Feyzin (FR); LACOMBE, Sylvie, F-69230 Saint Genis Laval (FR); ROULEAU, Loic, F-69390 Charly (FR); CAULLET, Philippe, F-68110 Illzach (FR); PAILLAUD, Jean-Louis, F-68100 Mulhouse (FR)
(86) Numéro de dépôt international: PCT/FR2006/001232
(87) Numéro de publication internationale: WO 2006/134249

(56) Documents cités:
- EP-A- 0 159 845
- FR-A- 2 862 299
- US-A- 4 528 171
- US-A- 4 537 754
- US-A- 4 695 667

## Description

### Domaine technique

La présente invention se rapporte à une nouvelle zéolithe de type structural EUO contenant dans sa porosité intracristalline au moins le cation organique azoté de formule N,N-diméthyl-N,N-di(3,3-diméthylbutyl)ammonium. L'invention se rapporte également au procédé de préparation de ladite zéolithe et l'utilisation de celle-ci comme élément d'un catalyseur dans un procédé de conversion de charges hydrocarbonées, comme élément d'un adsorbant dans un procédé de séparation de molécules hydrocarbonées ou dans un procédé de dépollution.

### Art antérieur

Les zéolithes de type structural EUO sont décrites dans l'art antérieur (Ch. Baerlocher, W.M. Meier et D.H. Olson, "Atlas of Zeolite Structure types", 5ème Edition, 2001) et présentent un réseau microporeux monodimensionnel, avec des pores délimités par des cycles à dix tétraèdres dont le diamètre est de 4,1 x 5,4 Å (1 Å = 1 Angström = 1.10⁻¹⁰ m). Ces canaux monodimensionnels présentent des poches latérales de profondeur 8,1 Å et de diamètre 6,8 x 5,8 Å (Zeolites, 8, 74, 1988).

Les zéolithes de type structural EUO comprennent la zéolithe EU-1, la zéolithe TPZ-3 et la zéolithe ZSM-50 et ont généralement la formule suivante sous forme anhydre : 100 XO₂ : 0-10 T₂O₃ : 0-20 R_{2/n}O où R représente un cation de valence n, X représente le silicium et/ou le germanium, T représente au moins un élément choisi parmi l'aluminium, le fer, le gallium, le bore, le titane, le vanadium, le zirconium, le molybdène, l'arsenic, l'antimoine, le chrome et le manganèse.

De manière générale, les méthodes de préparation de zéolithes de type structural EUO comprennent le mélange en milieu aqueux d'au moins une source d'un élément X, d'au moins une source d'un élément T, d'au moins une source d'un métal alcalin et d'un composé organique azoté jouant le rôle de structurant.

Les modes de synthèse des zéolithes de type structural EUO diffèrent en particulier par la nature du structurant organique employé, la proportion d'azote dans la zéolithe brute de synthèse et la composition chimique de la charpente cristalline.

La zéolithe EU-1, décrite dans la demande de brevet européenne EP-A-0 042 226, est préparée avec les sources des éléments X et T (X/T préférentiellement compris entre 5 et 75) en utilisant comme structurant soit le dérivé alkylé d'une polyméthylène α,ω-diammonium, soit un produit de dégradation dudit dérivé soit encore des précurseurs dudit dérivé, le structurant se trouvant après synthèse dans la porosité intracristalline de ladite zéolithe (A. Moini et al, Zeolites, 14, 504-511, 1994).

La zéolithe TPZ-3, décrite dans la demande de brevet européenne EP-A-0 051 318, est préparée avec les sources des éléments X et T (X/T compris entre 10 et 125) en utilisant la même famille de structurant que celle employée pour synthétiser la zéolithe EU-1. Il est notamment décrit l'utilisation du composé 1,6-N,N,N,N',N',N'-hexaméthylhexaméthylènediammonium.

La zéolithe ZSM-50, décrite dans les documents EP-A-0 159 845 et US 4,640,829, est préparée avec les sources des éléments X et T (X/T supérieur à 50) en utilisant comme structurant le dérivé dibenzyldiméthylammonium (DBDMA), lequel est contenu dans la porosité intracristalline de ladite zéolithe (A. Thangaraj et al, Zeolites, 11, 69-72, 1991).

Les zéolithes sont très utilisées dans l'industrie du raffinage et de la pétrochimie, comme élément d'un catalyseur dans un procédé de conversion de charges hydrocarbonées, comme élément d'adsorbant pour la dépollution ou la séparation.

### Résumé de l'invention

La présente invention est basée sur la découverte d'une nouvelle zéolithe de type structural EUO, comprenant au moins un élément tétravalent X choisi parmi le silicium, l'étain, le titane et le germanium, de préférence choisi parmi le silicium et le germanium et éventuellement au moins un élément trivalent T choisi parmi l'aluminium, le fer, le bore, l'indium et le gallium et caractérisée en ce qu'elle contient au moins le cation N,N-diméthyl-N,N-di(3,3-diméthylbutyl)ammonium dans sa porosité intracristalline. De manière très préférée, l'élément X est le silicium et l'élément T est l'aluminium. De manière très avantageuse, ladite zéolithe, sous sa forme brute de synthèse, ne contient pas, dans sa porosité intracristalline, de cations autres que le cation organique azoté de formule N,N-diméthyl-N,N-di(3,3-diméthylbutyl)ammonium. En particulier, la zéolithe de type structural EUO selon l'invention est préférentiellement dépourvue de cation alcalin ou alcalino-terreux. L'invention concerne également un procédé de préparation de ladite zéolithe et l'utilisation de celle-ci comme élément d'un catalyseur dans un procédé de conversion de charges hydrocarbonées, comme élément d'un adsorbant dans un procédé de séparation de molécules hydrocarbonées ou dans un procédé de dépollution.

### Description de l'invention

La présente invention a pour objet une zéolithe de type structural EUO comprenant au moins un élément tétravalent X choisi parmi le silicium, l'étain, le titane et le germanium, ladite zéolithe étant caractérisée en ce qu'elle contient au moins le cation N,N-diméthyl-N,N-di(3,3-diméthylbutyl)ammonium dans sa porosité intracristalline.

L'élément tétravalent X présent dans la zéolithe de type structural EUO selon l'invention est préférentiellement choisi parmi le silicium et le germanium et de manière encore plus préférée, ledit élément X est le silicium.

La zéolithe de type structural EUO selon l'invention comprend en outre, et selon un mode préféré de réalisation de ladite zéolithe, au moins un élément trivalent T choisi parmi l'aluminium, le fer, le bore, le gallium et l'indium. De préférence, l'élément T est l'aluminium.

La structure de la zéolithe de type structural EUO selon l'invention est identifiée par diffractométrie des rayons X. Sa cristallinité est calculée à partir du diagramme de diffraction par comparaison avec une zéolithe de type structural EUO de référence. La cristallinité correspond au rapport de la surface des pics des solides analysés sur la surface des pics de la zéolithe de type structural EUO de référence, dans le domaine d'angle de diffraction 2θ = 8 à 40°. La zéolithe selon la présente invention présente un diagramme de diffraction conforme à celui des zéolithes de type structural EUO et elle présente une cristallinité supérieure à 80%, de préférence supérieure à 85% et de manière encore plus préférée supérieure à 90 %.

La composition chimique de la zéolithe de type structural EUO selon l'invention est déterminée par les techniques classiques d'analyses élémentaires. En particulier les teneurs en éléments X et éventuellement en élément T, notamment en silicium et éventuellement en aluminium, sont déterminées par fluorescence de rayons X. Le rapport X/T, en particulier le rapport Si/Al, de la zéolithe de type structural EUO selon l'invention est au moins égal à 5, de préférence au moins égal à 15 et de manière très préférée au moins égal à 60. Dans le cas préféré où l'élément X est le silicium et l'élément T est l'aluminium, la zéolithe de type structural EUO selon l'invention est alors un aluminosilicate cristallisé dont le rapport Si/Al est au moins égal à 5, de préférence au moins égal à 15 et de manière très préférée au moins égal à 60.

Le cation N,N-diméthyl-N,N-di(3,3-diméthylbutyl)ammonium jouant le rôle de structurant et présent dans la porosité intracristalline de la zéolithe de type structural EUO selon l'invention est identifié par spectroscopie de résonance magnétique nucléaire du carbone 13 avec rotation à l'angle magique et polarisation croisée. Les déplacements chimiques mesurés par RMN ¹H (D₂O, 400 MHz, 25°C, δ ppm/TMS) sont situés à 0,83 (s, 18H), 1,51-1,55 (m, 4H), 2,91 (s, 6H) et 3,18-3,23 (m, 4H). De manière très préférée, la zéolithe de type structural EUO selon l'invention, sous sa forme brute de synthèse, ne contient pas, dans sa porosité intracristalline, de cations autres que le cation organique azoté de formule N,N-diméthyl-N,N-di(3,3-diméthylbutyl)ammonium. En particulier, la zéolithe de type structural EUO selon l'invention est préférentiellement dépourvue de cation alcalin ou alcalino-terreux.

Un autre objet de l'invention est le procédé de préparation de la zéolithe de type structural EUO selon l'invention. Le procédé de préparation selon l'invention comprend le mélange en milieu aqueux d'au moins une source d'au moins un élément tétravalent X choisi parmi le silicium, l'étain, le titane et le germanium, éventuellement d'au moins une source d'au moins un élément trivalent T choisi parmi l'aluminium, le fer, le bore, l'indium et le gallium, d'au moins un structurant organique azoté Q choisi parmi un sel du N,N-diméthyl-N,N-di(3,3-diméthylbutyl)ammonium et les précurseurs correspondant audit sel. Le mélange est chauffé jusqu'à cristallisation de la zéolithe de type structural EUO.

Le structurant organique azoté Q peut être un sel du N,N-diméthyl-N,N-di(3,3-diméthylbutyl)ammonium, en particulier un halogénure, un hydroxyde, un sulfate, un silicate ou un aluminate du N,N-diméthyl-N,N-di(3,3-diméthylbutyl)ammonium. De manière très préférée, le structurant organique azoté utilisé dans le procédé selon l'invention est l'hydroxyde de N,N-diméthyl-N,N-di(3,3-diméthylbutyl)ammonium.

Les sels du N,N-diméthyl-N,N-di(3,3-diméthylbutyl)ammonium peuvent également être obtenus à partir de précurseurs qui peuvent être utilisés tels quels dans le mélange réactionnel ou peuvent être préchauffés ensemble dans le récipient de réaction, de préférence en solution avant l'addition des autres réactifs nécessaires pour la synthèse de la zéolithe de type structural EUO. Des précurseurs d'un sel du N,N-diméthyl-N,N-di(3,3-diméthylbutyl)ammonium sont en particulier le N,N,3,3-tétraméthylbutylamine et le 1-bromo-3,3-diméthylbutane, lesquels sont avantageusement mélangés à une température voisine de 100°C.

Des matériaux zéolithiques S jouant le rôle de germes peuvent être introduits lors du procédé de préparation de l'invention, sous plusieurs formes, pour favoriser et accélérer la formation de la zéolithe de type structural EUO. Ces germes sont au moins en partie, et préférentiellement en totalité, de même type structural que la zéolithe EUO de l'invention. Très avantageusement, il s'agit donc de germes d'au moins un matériau zéolithique de type structural EUO. Ces germes comprennent au moins une source d'élément X et au moins une source d'élément T, avec un rapport X/T compris entre 1 et 1000, où X et T sont définis comme précédemment. De façon très préférée, la zéolithe de l'invention est synthétisée à l'aide de germes zéolithiques comprenant les mêmes éléments X et T. Ces germes peuvent être introduits, après avoir subi au moins l'une des étapes choisie parmi les étapes suivantes : lavage, séchage, calcination et échange ionique. Les germes peuvent également être introduits sous la forme brute de synthèse.

Les matériaux zéolithiques jouant le rôle de germes peuvent être introduits à n'importe quel moment du procédé de préparation de la zéolithe de type structural EUO que l'on cherche à synthétiser. Les germes peuvent être introduits en même temps que la source de l'élément X, éventuellement celle de l'élément T, et du structurant organique Q, ou les germes peuvent être introduits en premier dans le mélange aqueux ou encore les germes peuvent être introduits après l'introduction de la source de l'élément X, éventuellement celle de l'élément T, et du structurant organique azoté. De préférence, les germes sont introduits après homogénéisation, au moins en partie, du mélange aqueux contenant la source de l'élément X, éventuellement celle de l'élément T, et ledit structurant organique azoté.

La taille des particules de germes zéolithiques pouvant avoir une influence sur le processus de synthèse, il convient de choisir des germes présentant une taille de particules telle que les conditions de synthèse soient optimales. On entend par particule de germes zéolithiques, soit un cristal de zéolithe soit un agrégat de cristaux de zéolithe où un agrégat est un ensemble formé par au moins deux cristaux de zéolithe ayant au moins un point de contact entre eux. Ainsi, au moins la majeure partie, c'est-à-dire au moins 90 % en volume, des particules de germes introduites lors de la préparation de la zéolithe de type structural EUO ont une taille comprise entre 0,001 et 500 µm, de préférence entre 0,005 et 250 µm et de manière encore plus préférée entre 0,005 et 200 µm.

Dans le procédé de préparation selon l'invention, le mélange réactionnel a la composition suivante, exprimée sous la forme d'oxydes :

| | |
|---|---|
| XO₂/T₂O₃ (mol/mol) | 10-∞ |
| OH⁻/XO₂ (mol/mol) | 0,002 à 5 |
| Q/XO₂ (mol/mol) | 0,002 à 5 |
| H₂O/XO₂ (mol/mol) | 1 à 500 |
| S/XO₂ (g/g) | 0 à 0,1 |

de manière préférée, le mélange réactionnel a la composition suivante, exprimée sous la forme d'oxydes:

| | |
|---|---|
| XO₂/T₂O₃ (mol/mol) | 30-∞ |
| OH⁻/XO₂ (mol/mol) | 0,005 à 4 |
| Q/XO₂ (mol/mol) | 0,005 à 4 |
| H₂O/XO₂ (mol/mol) | 3 à 250 |
| S/XO₂ (g/g) | 0 à 0,07 |

et, de manière encore plus préférée, le mélange réactionnel a la composition suivante, exprimée sous la forme d'oxydes :

| | |
|---|---|
| XO₂/T₂O₃ (mol/mol) | 120-∞ |
| OH⁻/XO₂ (mol/mol) | 0,01 à 3 |
| Q/XO₂ (mol/mol) | 0,01 à 3 |
| H₂O/X₂ (mol/mol) | 5 à 100 |
| S/XO₂ (g/g) | 0 à 0,04 |

où
X représente au moins un élément tétravalent choisi parmi le silicium, l'étain, le titane et le germanium, de préférence choisi parmi le silicium et le germanium et de manière très préférée X est le silicium,
T représente au moins un élément trivalent choisi parmi l'aluminium, le fer, le bore, l'indium et le gallium, de préférence T est l'aluminium,
Q représente un sel du N,N-diméthyl-N,N-di(3,3-diméthylbutyl)ammonium ou les précurseurs correspondant audit sel,
S représente les germes de zéolithe présents sous la forme brute, séchée, calcinée ou échangée.

Q est de préférence introduit sous la forme d'un sel du N,N-diméthyl-N,N-di(3,3-diméthylbutyl)ammonium et de manière très préférée ledit sel est introduit sous sa forme hydroxyde. Cette forme peut être obtenue à partir d'un halogénure de N,N-diméthyl-N,N-di(3,3-diméthylbutyl)ammonium. De manière préférée, l'hydroxyde de N,N-diméthyl-N,N-di(3,3-diméthylbutyl)ammonium est obtenu par traitement à température ambiante d'une solution de bromure de N,N-diméthyl-N,N-di(3,3-diméthylbutyl)ammonium par de l'oxyde d'argent. Le bromure de N,N-diméthyl-N,N-di(3,3-diméthylbutyl)ammonium peut être préparé par des méthodes connues de l'Homme du métier. Une méthode possible de préparation du bromure de N,N-diméthyl-N,N-di(3,3-diméthylbutyl)ammonium est donnée par le schéma réactionnel suivant :

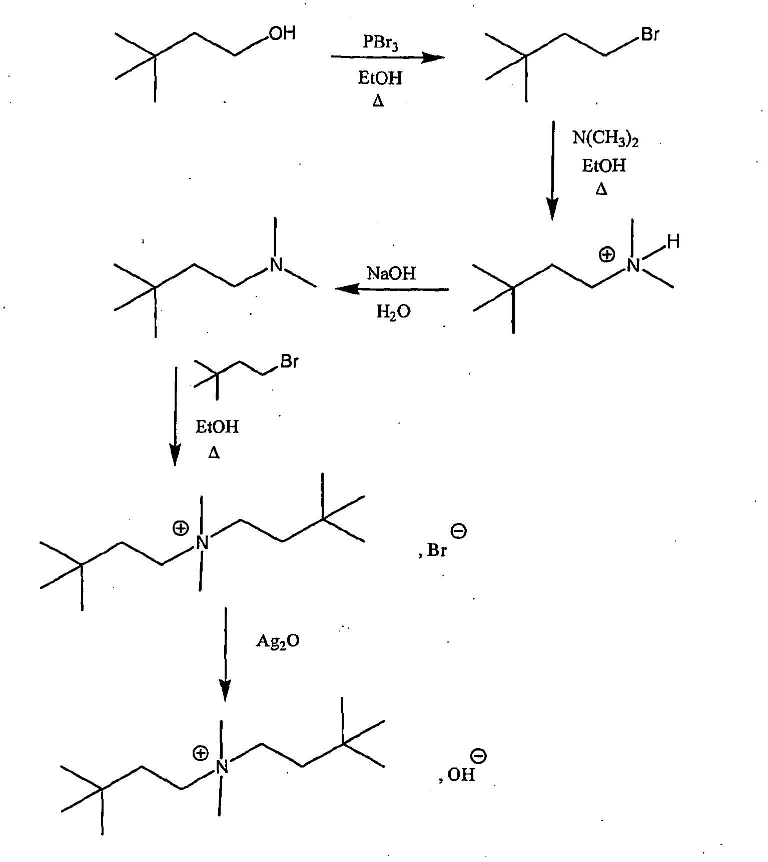

De manière préférée, X est le silicium et T est l'aluminium.

La source de l'élément tétravalent X peut être tout composé comprenant l'élément X et pouvant libérer cet élément en solution sous forme réactive. Avantageusement, lorsque l'élément X est le silicium, la source de silicium peut être l'une quelconque de celles dont l'utilisation est habituellement envisagée pour la synthèse des zéolithes, par exemple la silice solide en poudre, l'acide silicique, la silice colloïdale ou la silice en solution. Parmi les silices en poudre utilisables, il convient de citer les silices précipitées, spécialement celles obtenues par précipitation à partir d'une solution d'un silicate de métal alcalin, comme les " Zeosil " ou les "Tixosil ", produites par Rhodia, les silices pyrogénées telles que les "Aerosil " produites par Degussa et les "Cabosil" produites par Cabot et les gels de silice. Des silices colloïdales de diverses granulométries peuvent être utilisées, comme celles vendues sous les marques déposées "LUDOX" de Dupont. Les silices dissoutes utilisables sont notamment les verres solubles ou silicates commercialisés contenant : 0,5 à 6,0 et spécialement 2,0 à 4,0 moles de SiO₂ par mole d'oxyde de métal alcalin et les silicates obtenus par dissolution de silice dans un hydroxyde de métal alcalin, un hydroxyde d'ammonium quaternaire ou un mélange de ceux-ci.

La source de l'élément trivalent T, éventuellement introduite dans le procédé de préparation selon l'invention, peut être tout composé comprenant l'élément T et pouvant libérer cet élément en solution aqueuse Dans le cas préféré où T est l'aluminium, la source d'aluminium est le plus avantageusement l'hydroxyde d'aluminium mais peut aussi être l'aluminium, un sel d'aluminium, par exemple le chlorure, le nitrate ou le sulfate, un alcoolate d'aluminium ou l'alumine elle-même qui de préférence se trouve sous une forme hydratée ou hydratable comme l'alumine colloïdale, la pseudoboehmite, la boehmite, l'alumine gamma, ou les trihydrates d'aluminium.

On peut utiliser des mélanges des sources citées ci-dessus. Des sources combinées de silicium et d'aluminium peuvent aussi être mises en oeuvre telles que les silice-alumines amorphes ou certaines argiles.

Le mélange de réaction est habituellement mis à réagir sous la pression autogène, éventuellement avec apport d'un gaz, par exemple d'azote, à une température comprise entre 85 et 250°C jusqu'à ce qu'il se forme des cristaux de la zéolithe, ce qui peut durer de 1 minute à plusieurs mois suivant la composition des réactifs, le mode de chauffage et de mélange, la température de travail et l'agitation. L'agitation est facultative, mais préférable, en particulier parce qu'elle abrège la durée de réaction.

Au terme de la réaction, la phase solide est collectée sur un filtre et lavée. A ce stade là, la zéolithe EUO obtenue selon le procédé de l'invention est dite brute de synthèse et contient dans sa porosité intracristalline au moins le cation N,N-diméthyl-N,N-di(3,3-dimethylbutyl)ammonium. La zéolithe est alors prête pour être séchée et / ou calcinée. Ainsi, afin d'obtenir la forme protonée hydrogène de la zéolithe de type structural EUO, on procède généralement à une étape de calcination de ladite zéolithe brute de synthèse à une température comprise entre 500 et 600°C. Après calcination, la zéolithe de type structural EUO selon l'invention est débarrassée du structurant organique azoté. La zéolithe de l'invention ne contient plus d'azote lorsqu'elle se trouve sous sa forme calcinée.

La présente invention concerne également l'utilisation de la zéolithe de type structural EUO comme solide acide pour la catalyse dans les domaines du raffinage et de la pétrochimie. Par solide acide, on entend que la zéolithe se trouve sous forme hydrogène, c'est-à-dire que la zéolithe brute de synthèse a été calcinée. La zéolithe de type structural EUO de l'invention est également avantageusement utilisée comme adsorbant pour le contrôle de la pollution ou comme tamis moléculaire pour la séparation.

Par exemple, lorsque la zéolithe de type structural EUO est utilisée comme solide acide dans un catalyseur, elle est sous forme calcinée, c'est-à-dire débarrassée du structurant azoté, et peut être associée à une matrice inorganique qui peut être inerte ou catalytiquement active et éventuellement à une phase métallique. La matrice inorganique peut être présente simplement comme liant pour maintenir ensemble les petites particules de la zéolithe sous les différentes formes connues des catalyseurs (extrudés, pastilles, billes, poudres), ou bien peut être ajoutée comme diluant pour imposer le degré de conversion dans un procédé qui progresserait sinon à une allure trop rapide conduisant à un encrassement du catalyseur en conséquence d'une formation importante de coke. Des matrices inorganiques typiques sont notamment des matières de support pour les catalyseurs comme les différentes formes de silice, d'alumine, les silice-alumines, la magnésie, la zircone, les oxydes de titane, de bore, les phosphates d'aluminium, de titane, de zirconium, les argiles telles que le kaolin, la bentonite, la montmorillonite, la sépiolite, l'attapulgite, la terre à foulon, les matières poreuses synthétiques comme SiO₂-Al₂O₃, SiO₂-ZrO₂, SiO₂-ThO₂, SiO₂-BeO, SiO₂-TiO₂ ou toute combinaison de ces composés.

La zéolithe de type structural EUO de l'invention peut aussi être associée à au moins une autre zéolithe et jouer le rôle de phase active principale ou d'additif

La matrice inorganique peut être un mélange de différents composés, en particulier d'une phase inerte et d'une phase active.

La phase métallique est introduite sur la zéolithe seule, la matrice inorganique seule ou l'ensemble matrice inorganique-zéolithe, par exemple par imprégnation avec des cations ou oxydes choisis parmi les éléments suivants : Cu, Ag, Ga, Mg, Ca, Sr, Zn, Cd, B, Al, Sn, Pb, V, P, Sb, Cr, Mo, W, Mn, Re, Fe, Co, Ni, Pt, Pd, Ru, Rh, Os, Ir et tout autre élément de la classification périodique des éléments.

Les compositions catalytiques comportant une zéolithe de type structural EUO, issue de la calcination de la zéolithe de type structural EUO selon l'invention, conviennent de façon générale à la mise en oeuvre des principaux procédés de transformation d'hydrocarbures et des réactions de synthèse de composés organiques tels que les éthers.

Les compositions catalytiques comportant une zéolithe de type structural EUO, issue de la calcination de la zéolithe de type structural EUO selon l'invention trouvent avantageusement leur application dans les réactions d'isomérisation, de transalkylation et de dismutation, d'alkylation et de désalkylation, d'hydratation et de déshydratation, d'oligomérisation et de polymérisation, de cyclisation, d'aromatisation, de craquage et d'hydrocraquage, de reformage, d'hydrogénation et de déshydrogénation, d'oxydation, d'halogénation, de synthèses d'amines, d'hydrodésulfuration et d'hydrodénitrification, d'élimination catalytique des oxydes d'azote, lesdites réactions comprenant des hydrocarbures aliphatiques saturés et insaturés, des hydrocarbures aromatiques, des composés organiques oxygénés et des composés organiques contenant de l'azote et/ou du soufre, ainsi que des composés organiques contenant d'autres groupes fonctionnels.

L'invention est illustrée par les exemples suivants.

### EXEMPLE 1 : synthèse du structurant organique azoté, l'hydroxyde de N,N-diméthyl-N,N-di(3,3-diméthylbutyl)ammonium

On prépare un mélange contenant 1 g (0,77.10⁻² moles) de N,N,3,3-tétraméthylbutylamine (Aldrich) et 1,917 g (1,16.10⁻² moles) de 1-bromo-3,3-diméthylbutane (Prolabo) et environ 4 ml d'isopropanol. On ajoute ensuite 1,23 g (1,16.10⁻² mole) de carbonate de sodium. Cette suspension est portée à reflux durant 2 jours à la température de 100°C. Un solide blanc apparaît et après cette durée, on ajoute au mélange réactionnel environ 5 ml de diéthyléther de manière à augmenter la quantité de précipité. L'isopropanol et le diéthyléther sont alors évaporés à 30°C à l'aide d'un évaporateur rotatif. Le produit organique formé est extrait du mélange réactionnel à l'aide de dichlorométhane. Trois extractions successives avec 10 ml de dichlorométhane sont effectuées. La phase organique obtenue est évaporée à l'aide d'un évaporateur rotatif. Le solide blanc formé est lavé au diéthyléther sec et filtré sur membrane Nylon (0 = 0,2 µm). On obtient alors 0,8 g (0,27.10⁻² moles) de bromure de N,N-diméthyl-N,N-di(3,3-diméthylbutyl)ammonium (DMDMBA-Br). La nature de l'espèce obtenue a été vérifiée par résonance magnétique nucléaire du proton, les résultats de cette analyse sont donnés ci-après. RMN ¹H (D₂O, 400 MHz, 25°C, δ ppm/TMS) : 0,83 (s, 18H), 1,51-1,55 (m, 4H), 2,91 (s, 6H), 3,18-3,23 (m, 4H).

Un excès d'oxyde d'argent (Ag₂O) est mis au contact d'une solution aqueuse de DMDMBA-Br (1,5 Ag₂O pour 1 DMDMBA-Br). Ce mélange est maintenu sous agitation pendant une nuit à température ambiante. Le bromure d'argent qui se forme alors est séparé de la solution par centrifugation. Le liquide surnageant est une solution d'hydroxyde de N,N-diméthyl-N,N-di(3,3-diméthylbutyl)ammonium. La concentration de cette solution est déterminée par résonance magnétique nucléaire du proton.

### EXEMPLE 2 (comparatif) : Zéolithe de type structural EUO contenant les éléments Si et Al, de rapport Si/Al égal à 25,0, synthétisée avec le cation hexaméthylammonium comme structurant organique.

La zéolithe de type structural EUO contenant les éléments Si et Al, de rapport Si/Al égal à 25,0 est synthétisée avec le bromure d'hexaméthonium (HM, 1,6-bis( triméthylammonium)hexane) selon les conditions décrites par J.L. Casci *et al* dans l'exemple 3 du brevet EP-A- 0 042 226.

Les résultats de diffraction des rayons X et d'analyse chimique sont reportés dans le tableau 1. Le solide obtenu est une zéolithe EUO pure, de cristallinité de référence (100 %), de rapport Si/Al de 25,0.

**Tableau 1 : caractéristiques du solide obtenu**

| Diffraction des rayons X | |
|---|---|
| Identification de phase | EUO |
| Cristallinité (%) | 100 (référence) |
| Analyses chimiques | |
| SiO₂ (% poids) | 81,0 |
| Al₂O₃ (% poids) | 2,75 |
| Na₂O (% poids) | 0,47 |
| N (% poids) | 1,40 |
| PAF (% poids) | 15,0 |
| Si/Al (mol/mol) | 25,0 |

| | |
|---|---|
| PAF = perte au feu | |

Cette zéolithe, contenant les éléments Si et Al, de rapport Si/Al de 25,0, préparée avec HM selon l'art antérieur, correspond à la zéolithe EU-1. Elle sert de germes pour la synthèse de la zéolithe de type structural EUO selon l'invention.

### EXEMPLE 3 (invention) : zéolithe de type structural EUO purement silicique synthétisée en présence de germes

Les conditions de synthèse sont définies dans le tableau 2.

On prépare la solution A composée d'eau et du structurant organique azoté en diluant 2,62 g d'une solution aqueuse à 20,6% en masse d'hydroxyde de N,N-diméthyl-N,N-di(3,3-diméthylbutyl)ammonium dans 0,92 g d'eau. On ajoute à cette solution 0,3 g de silice (Aérosil 130, Degussa). Le mélange est agité 1 heure jusqu'à homogénéisation. On ajoute ensuite 6 mg de germes de zéolithe de type structural EUO, brute de synthèse, contenant les éléments Si, Al, le sodium et le cation hexaméthonium, préparés selon l'exemple 2. On mélange le gel réactionnel pendant 30 minutes puis on fait réagir le mélange résultant dans un autoclave de 20 ml sous agitation pendant 2 jours à 170 °C sous pression autogène. Après refroidissement, on filtre le produit et on le lave avec 250 ml d'eau déminéralisée puis on le sèche en étuve ventilée à 120°C.

**Tableau 2 : conditions de synthèse**

| Formulation du gel | |
|---|---|
| SiO₂ (mol) | 60 |
| QOH (mol) | 28 |
| H₂O (mol) | 2000 |
| EUO/SiO₂ (g/g) | 0,02 |
| Conditions de cristallisation | |
| Température (°C) | 170 |
| Agitation | Tourne broche, 25 tours/min |
| Durée de cristallisation (jour) | 2 |

Les résultats de diffraction des rayons X et de spectroscopie par résonance magnétique nucléaire, du carbone 13 par rotation à l'angle magique sous polarisation croisée sont reportés dans le tableau 3. Cette synthèse conduit à la zéolithe de type structural EUO pure, de cristallinité de 95 % par rapport à la référence (zéolithe obtenue dans l'exemple 2), contenant le cation N,N-diméthyl-N,N-di(3,3-diméthylbutyl)ammonium dans sa porosité intracristalline.

**Tableau 3 : caractéristiques du solide obtenu**

| Diffraction des rayons X | |
|---|---|
| Identification de phase | EUO |
| Cristallinité (%) | 95 |
| Spectroscopie de résonance magnétique nucléaire du carbone 13 à l'angle magique sous polarisation croisée | |
| Identification du composé organique inclus dans la zéolithe | N,N-diméthyl-N,N-di(3,3-diméthylbutyl)ammonium |

Cette zéolithe brute de synthèse de type structural EUO, purement silicique et contenant le cation N,N-diméthyl-N,N-di(3,3-diméthylbutyl)ammonium illustre la présente invention.

### EXEMPLE 4 (invention) : zéolithe de type structural EUO purement silicique préparée en absence dé germes

Les conditions de synthèse sont définies dans le tableau 4.

On prépare la solution A composée d'eau et du structurant organique azoté en diluant 2,62 g d'une solution aqueuse à 20,6% en masse d'hydroxyde de N,N-diméthyl-N,N-di(3,3-diméthylbutyl)ammonium dans 0,92 g d'eau. On ajoute à cette solution 0,3 g de silice (Aérosil 130, Degussa). Le mélange est agité 1 heure jusqu'à homogénéisation. On fait ensuite réagir le mélange résultant dans un autoclave de 20 ml sous agitation pendant 21 jours à 170 °C sous pression autogène. Après refroidissement, on filtre le produit et on le lave avec 250 ml d'eau déminéralisée puis on le sèche en étuve ventilée à 120°C.

**Tableau 4 : conditions de synthèse**

| Formulation du gel | |
|---|---|
| SiO₂ (mol) | 60 |
| QOH (mol) | 28 |
| H₂O (mol) | 2000 |
| Conditions de cristallisation | |
| Température (°C) | 170 |
| Agitation | Tourne broche, 25 tours/min |
| Durée de cristallisation (jour) | 21 |

Les résultats de diffraction des rayons X et de spectroscopie par résonance magnétique nucléaire du carbone 13 par rotation à l'angle magique sous polarisation croisée sont reportés dans le tableau 5. Cette synthèse conduit à la zéolithe de type structural EUO pure, de cristallinité de 90 % par rapport à la référence (zéolithe obtenue dans l'exemple 2), purement silicique et contenant le cation N,N-diméthyl-N,N-di(3,3-diméthylbutyl)ammonium dans sa porosité intracristalline.

**Tableau 5 : caractéristiques du solide obtenu**

| Diffraction des rayons X | |
|---|---|
| Identification de phase | EUO |
| Cristallinité (%) | 90 |
| Spectroscopie de résonance magnétique nucléaire du carbone 13 à l'angle magique sous polarisation croisée | |
| Identification du composé organique inclus dans la zéolithe | N,N-diméthyl-N,N-di(3,3-diméthylbutyl)ammonium |

Cette zéolithe brute de synthèse de type structural EUO, purement silicique et contenant le cation N,N-diméthyl-N,N-di(3,3-diméthylbutyl)ammonium dans sa porosité intracristalline illustre la présente invention.

### EXEMPLE 5 (invention) : zéolithe de type structural EUO alumino-silicique préparée en présence de germes

Les conditions de synthèse sont définies dans le tableau 6.

On prépare la solution A composée d'eau et du structurant organique azoté en diluant 2,47 g d'une solution aqueuse à 21,82% en masse d'hydroxyde de N,N-diméthyl-N,N-di(3,3-diméthylbutyl)ammonium dans 1,07 g d'eau. On ajoute 0,0064 g d'hydroxyde d'aluminium (Prolabo) et on agite 30 minutes. On ajoute à ce mélange 0,3 g de silice (Aérosil 130, Degussa). L'ensemble est agité 1 heure jusqu'à homogénéisation. On ajoute finalement 6 mg de germes de zéolithe de type structural EUO, brute de synthèse, contenant les éléments Si, Al, le sodium et le cation hexaméthonium, préparés selon l'exemple 2. On mélange le gel réactionnel pendant 30 minutes puis on fait réagir le mélange résultant dans un autoclave de 20 ml sous agitation pendant 4,5 jours à 170°C sous pression autogène. Après refroidissement, on filtre le produit et on le lave avec 250 ml d'eau déminéralisée puis on le sèche en étuve ventilée à 120°C.

**Tableau 6 : conditions de synthèse**

| Formulation du gel | |
|---|---|
| SiO₂ (mol) | 60 |
| Al₂O₃ (mole) | 0,5 |
| QOH (mol) | 28 |
| H₂O (mol) | 2000 |
| EUO/SiO₂ (g/g) | 0,02 |
| Conditions de cristallisation | |
| Température (°C) | 170 |
| Agitation | Tourne broche, 25 tours/min |
| Durée de cristallisation (jour) | 4,5 |

Les résultats de diffraction des rayons X, d'analyse chimique et de spectroscopie par résonance magnétique nucléaire du carbone 13 par rotation à l'angle magique sous polarisation croisée sont reportés dans le tableau 7. Cette synthèse conduit à la zéolithe de type structural EUO pure, de cristallinité de 90 % par rapport à la référence (zéolithe obtenue dans l'exemple 2), de rapport Si/Al de 100 et contenant le cation N,N-diméthyl-N,N-di(3,3-diméthylbutyl)ammonium dans sa porosité intracristalline.

**Tableau 7 : caractéristiques du solide obtenu**

| Diffraction des rayons X | |
|---|---|
| Identification de phase | EUO |
| Cristallinité (%) | 90 |
| Analyses chimiques | |
| Si/Al (mol/mol) | 100 |
| Spectroscopie de résonance magnétique nucléaire du carbone 13 à l'angle magique sous polarisation croisée | |
| Identification du composé organique inclus dans la zéolithe | N,N-diméthyl-N,N-di(3,3-diméthylbutyl)ammonium |

Cette zéolithe brute de synthèse de type structural EUO, contenant les éléments Si et Al et le cation N,N-diméthyl-N,N-di(3,3-diméthylbutyl)ammonium et présentant un rapport Si/Al de 100 illustre la présente invention.

### EXEMPLE 6 (invention) : préparation d'un catalyseur à partir d'une zéolithe de type structural EUO synthétisée dans le système Si-Al, avec le N,N-diméthyl-N,N-di(3,3-diméthylbutyl)ammonium comme structurant organique azoté.

La zéolithe utilisée dans cet exemple est la zéolithe de type structural EUO brute de synthèse obtenue dans le système Si-Al de l'exemple 5 comprenant le N,N-diméthyl-N,N-di(3,3-diméthylbutyl)ammonium dans sa porosité intracristalline et présentant un rapport atomique Si/Al global égal à 100.

Cette zéolithe de type structural EUO subit tout d'abord une calcination dite sèche à 550°C sous flux d'air durant 8 heures. Le solide obtenu est alors mis sous forme d'extrudés par malaxage avec de la boehmite (Pural SB3, Sasol) dans un malaxeur à bras en Z et extrusion de la pâte obtenue avec une extrudeuse piston. Les extrudés sont alors séchés à 120°C pendant 12 heures sous air et calcinés à 550°C pendant 2 heure sous flux d'air dans un four à moufle. Ils constituent le support du catalyseur.

Du platine est déposé sur l'alumine de ce support par échange anionique avec de l'acide hexachloroplatinique en présence d'un agent compétiteur (acide chlorhydrique). Le support échangé est ensuite séché à 120°C pendant 12 heures sous air et calciné à 550°C sous débit d'air sec pendant 1 heure.

Le catalyseur ainsi préparé est composé en teneurs pondérales de 50% de zéolithe de type structural EUO forme hydrogène, de 49,8% d'alumine et de 0,2% de platine.

## Revendications

1. Zéolithe de type structural EUO comprenant au moins un élément tétravalent X choisi parmi le silicium, le germanium, le titane et l'étain et **caractérisée en ce qu'**elle contient au moins le cation N,N-diméthyl-N,N-di(3,3-diméthylbutyl)ammonium dans sa porosité intracristalline.

2. Zéolithe selon la revendication 1 dans laquelle l'élément tétravalent X est choisi parmi le germanium et le silicium.

3. Zéolithe selon la revendication 2 dans laquelle l'élément tétravalent X est le silicium.

4. Zéolithe selon l'une des revendications 1 à 3 comprenant au moins un élément trivalent T choisi parmi l'aluminium, le fer, le bore, le gallium et l'indium.

5. Zéolithe selon la revendication 4 dans laquelle ledit élément T est l'aluminium.

6. Zéolithe selon la revendication 4 ou 5 telle qu'elle présente un rapport X/T d'au moins 60.

7. Procédé de préparation d'une zéolithe de type structural EUO selon l'une des revendications 1 à 6 comprenant le mélange en milieu aqueux d'au moins une source d'au moins un élément tétravalent X choisi parmi le silicium, l'étain, le titane et le germanium, éventuellement d'au moins une source d'au moins un élément trivalent T choisi parmi l'aluminium, le fer, le bore, l'indium et le gallium, d'au moins un structurant organique azoté Q choisi parmi un sel du N,N-diméthyl-N,N-di(3,3-diméthylbutyl)ammonium et les précurseurs correspondant audit sel.

8. Procédé selon la revendication 7 **caractérisé en ce qu'**il est réalisé en présence de germes (S) d'au moins un matériau zéolithique de type structural EUO.

9. Procédé selon la revendication 7 ou la revendication 8 **caractérisé en ce que** les germes sont introduits après homogénéisation, au moins en partie, du mélange aqueux contenant la source de l'élément X, éventuellement celle de l'élément T, et ledit structurant organique azoté.

10. Procédé selon l'une des revendications 7 à 9 **caractérisé en ce que** le mélange réactionnel lors de la synthèse a la composition suivante, exprimée sous la forme d'oxydes :
| | |
|---|---|
| XO₂/T₂O₃ (mol/mol) | 10-∞ |
| OH⁻/XO₂ (mol/mol) | 0,002 à 5 |
| Q/XO₂ (mol/mol) | 0,002 à 5 |
| H₂O/XO₂ (mol/mol) | 1 à 500 |
| S/XO₂ (g/g) | 0 à 0,1 |

11. Procédé selon l'une des revendications 7 à 10 caractérisé en que l'élément X est le silicium et l'élément T est l'aluminium.

12. Procédé selon l'une des revendications 7 à 11 **caractérisé en ce que** ledit structurant organique azoté est l'hydroxyde de N,N-diméthyl-N,N-di(3,3-diméthylbutyl)ammonium.

13. Procédé selon l'une des revendications 7 à 12 caractérisé en qu'on réalise une étape finale de calcination.

## Claims

1. EUO-structural-type zeolite that comprises at least one tetravalent element X that is selected from among silicon, germanium, titanium and tin and **characterized in that** it contains at least the N,N-dimethyl-N,N-di(3,3-dimethylbutyl)ammonium cation in its intracrystalline pores.

2. Zeolite according to claim 1, wherein the tetravalent element X is selected among germanium and silicon.

3. Zeolite according to claim 2, wherein the tetravalent element X is silicon.

4. Zeolite according to one of claims 1 to 3 that comprises at least one trivalent element T that is selected among aluminum, iron, boron, gallium and indium.

5. Zeolite according to claim 4, wherein said element T is aluminum.

6. Zeolite according to claim 4 or 5 such that it has an X/T ratio of at least 60.

7. Process for the preparation of an LUO-structural-type zeolite according to one of claims 1 to 6 comprising the mixing in aqueous medium of at least one source of at least one tetravalent element X that is selected among silicon, tin, titanium and germanium, optionally at least one source of at least one trivalent element T that is selected among aluminum, iron, boron, indium and gallium, at least one nitrogen-containing organic structuring agent Q that is selected among an N,N-dimethyl-N,N-di(3,3-dimethylbutyl)ammonium salt, and the precursors corresponding to said salt.

8. Process according to claim 7, wherein it is produced in the presence or nuclei (S) of at least one EUO-structural-type zeolitic material.

9. Process according to claim 7 or claim 8, wherein the nuclei are introduced after homogenization, at least in part, of the aqueous mixture that contains the source of the element X, optionally that of the element T, and said nitrogen-containing organic structuring agent.

10. Process according to one of claims 7 to 9, wherein the reaction mixture during the synthesis has the following composition, expressed in the form of oxides;
| | |
|---|---|
| XO₂/T₂O₃ (mol/mol) | 10 - ∞ |
| OH⁻/XO₂ (mol/mol) | 0.002 to 5 |
| Q/XO₂ (mol/mol) | 0.002 to 5 |
| H₂O/XO₂ (mol/mol) | 1 to 500 |
| S/XO₂ (g/g) | 0 to 0. 1 |

11. Process according to one of claims 7 to 10, wherein the element X is silicon, and the element T is aluminum.

12. Process according to one of claims 7 to 11, wherein said nitrogen-containing organic structuring agent is the N,N-dimethyl-N,N-di(3,3-dimethylbutyl)ammonium hydroxide.

13. Process according to one of claims 7 to 12, wherein a final calcination stage is carried out.

## Patentansprüche

1. Zeolith vom Strukturtyp EUO, der mindestens ein vierwertiges Element X umfasst, welches aus Silicium, Germanium, Titan und Zinn ausgewählt ist, und der **dadurch gekennzeichnet ist, dass** er mindestens das Kation N,N-Dimethyl-N,N-di(3,3-dimethylbutyl)ammonium in seinen intrakristallinen Poren enthält.

2. Zeolith nach Anspruch 1, wobei das vierwertige Element X aus Germanium und Silicium ausgewählt ist.

3. Zeolith nach Anspruch 2, wobei es sich bei dem vierwertigen Element X um Silicium handelt.

4. Zeolith nach einem der Ansprüche 1 bis 3, der mindestens ein dreiwertiges Element T umfasst, welches aus Aluminium, Eisen, Bor, Gallium und Indium ausgewählt ist.

5. Zeolith nach Anspruch 4, wobei es sich bei dem Element T um Aluminium handelt.

6. Zeolith nach Anspruch 4 oder 5, derart, dass er ein X/T-Verhältnis von mindestens 60 aufweist.

7. Verfahren zur Herstellung eines Zeoliths vom Strukturtyp EUO gemäß einem der Ansprüche 1 bis 6, welches das Vermischen mindestens einer Quelle mindestens eines vierwertigen Elements X, das aus Silicium, Zinn, Titan und Germanium ausgewählt ist, möglicherweise mindestens einer Quelle mindestens eines dreiwertigen Elements T, das aus Aluminium, Eisen, Bor, Indium und Gallium ausgewählt ist, mindestens eines stickstoffhaltigen organischen strukturgebenden Mittels Q, das aus einem Salz des N,N-Dimethyl-N,N-di(3,3-dimethylbutyl)ammoniums und den jeweiligen Vorläufersubstanzen dieser Salze ausgewählt ist, in wässrigem Milieu umfasst.

8. Verfahren nach Anspruch 7, **dadurch gekennzeichnet, dass** es in Gegenwart von Keimen (S) mindestens eines zeolithischen Werkstoffs vom Strukturtyp EUO durchgeführt wird.

9. Verfahren nach Anspruch 7 oder Anspruch 8, **dadurch gekennzeichnet, dass** die Keime nach der, mindestens teilweisen, Homogenisierung der wässrigen Mischung, welche die Quelle des Elements X, moglicherweise diejenige des Elements T some das stickstoffhaltige organische strukturgebende Mittel enthalt, zugesetzt werden.

10. Verfahren nach einem der Ansprüche 7 bis 9, **dadurch gekennzeichnet, dass** die Reaktionsmischung bei der Synthese die folgende Zusammensetzung hat, ausgedrückt in Form von Oxiden:
| | |
|---|---|
| XO₂/T₂O₃ (mol/mol) | 10 - ∞ |
| OH⁻/XO₂ (mol/mol) | 0,002 bis 5 |
| Q/XO₂ (mol/mol) | 0,002 bis 5 |
| H₂O/XO₂ (mol/mol) | 1 bis 500 |
| S/XO₂ (g/g) | 0 bis 0,1 |

11. Verfahren nach einem der Ansprüche 7 bis 10, **dadurch gekennzeichnet, dass** es sich bei dem Element X um Silicium und bei dem Element T um Aluminium handelt.

12. Verfahren nach einem der Ansprüche 7 bis 11, **dadurch gekennzeichnet, dass** es sich bei dem stickstoffhaltigen organischen strukturgebenden Mittel um N,N-Dimethyl-N,N-di(3,3-dimethylbutyl)ammoniumhydroxid handelt.

13. Verfahren nach einem der Ansprüche 7 bis 12, **dadurch gekennzeichnet, dass** ein abschließender Brennschritt durchgeführt wird
